Europäisches Patentamt

European Patent Office

Office européen des brevets

(19)

(11) Publication number: **0 092 961**
**B1**

(12) **EUROPEAN PATENT SPECIFICATION**

(45) Date of publication of patent specification: **30.07.86**

(21) Application number: **83302203.1**

(22) Date of filing: **19.04.83**

(51) Int. Cl.⁴: **A 01 N 47/38, A 01 N 47/34, A 01 N 47/18, A 01 N 43/78, A 01 N 43/653** // (A01N47/38, 43:653),(A01N47/34, 43:653),(A01N47/18, 43:653),(A01N43/78, 43:653),(A01N43/653, 43:52)

(54) A fungicidal composition.

(30) Priority: **22.04.82 JP 68097/82**

(43) Date of publication of application:
**02.11.83 Bulletin 83/44**

(45) Publication of the grant of the patent:
**30.07.86 Bulletin 86/31**

(84) Designated Contracting States:
**AT BE CH DE FR GB IT LI NL SE**

(56) References cited:
**FR-A-2 332 707**
**GB-A-2 046 260**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Ishiguri, Yukio**
**14-7, Mefu-2-chome**
**Takarazuka-shi (JP)**
Inventor: **Takano, Hirotaka**
**14-7, Mefu-2-chome**
**Takarazuka-shi (JP)**
Inventor: **Funaki, Yuji**
**10-3-356, Sonehigashinocho-2-chome**
**Toyonaka-shi (JP)**

(74) Representative: **Goldin, Douglas Michael et al**
**J.A. KEMP & CO. 14, South Square Gray's Inn**
**London WC1R 5EU (GB)**

The file contains technical information submitted after the application was filed and not included in this specification

Courier Press, Leamington Spa, England.

# 0 092 961

## Description

The present invention relates to fungicidal compositions which comprise, an inert carrier and, as the active ingredients, (E)-1-(2,4-dichlorophenyl)-4,4-dimethyl-2-(1,2,4-triazol-1-yl)-1-penten-3-ol (hereinafter referred to as Compound A) and a benzimidazole or thiophanate type fungicide such as methyl-1-(butylcarbamoyl)-2-benzimidazole- carbamate (hereinafter referred to as Benomyl), 2-(4-thiazolyl)-benzimidazole (hereinafter referred to as Thiabendazole), methyl-2-benzimidazolecarbamate (hereinafter referred to as Carbendazim), 2-(2-furyl)benzimidazole (hereinafter referred to as Fuberidazole), 1,2-bis(3-methoxycarbonyl-2-thioureido)benzene (hereinafter referred to as methyl thiophanate) or 1,2-bis(3-ethoxycarbonyl-2-thioureido)benzene (hereinafter referred to as thiophanate).

As described in The Pesticide Manual, 6th Edition, benzimidazole and thiophanate type fungicides are excellent chemicals which have both preventive effect and curative effect on a wide range of plant diseases of fruit trees and vegetables and are rapidly effective and remain effective as well as having infiltration ability.

However, recently drug-resistant organisms appeared in the important plant diseases such as Powdery mildew, Gray mold and the like, presenting serious problems. (Longman: Systemic fungicides edited by R. W. March, 1972).

As mentioned in the UK Patent Application GB—A—2046260, Compound A is an excellent chemical having sufficient controlling effect on Powdery mildew, Rust and the like of cereals, fruit trees, vegetables and the like. In addition, Compound A has excellent properties as exemplified by having a controlling effect on strains resistant to benzimidazole or thiophanate type fungicides.

French Patent Application No. 2332707 discloses compositions of 1,2,4-triazole derivatives and various known fungicides and alleges that these have a synergistic effect. The 1,2,4-triazole derivatives in question differ from present compound A in that they have a 1-phenoxy-1-(1,2,4-triazol-1-yl)-alkyl structure as opposed to the present substituted styrene-type structure.

The present inventors have studied extensively fungicides which are able to simultaneously control many plant diseases in amounts as small as possible. As a result, it was found that the compositions of this invention are able to not only maintain the controlling effect of the ingredient compounds but also control simultaneously many plant diseases both preventively and curatively in small amounts.

The compositions of this invention contain Compound A and benzimidazole or thiophanate type fungicides as the active ingredients. The weight ratio of the two components is 0.1 to 10 parts by weight, preferably 0.5 to 5 parts by weight of benzimidazole or thiophanate type fungicide per 1 part by weight of Compound A.

The pathogens on which the compositions of this invention have controlling effect preventively or curatively are Pyricularia oryzae, Cochliobolus miyabeanus, Rhizoctonia solani of rice plant; Erysphe graminis f. sp. hordei, f. sp. tritici, Gibberella zeae, Puccinia striiformis, P. graminis, P. recondita, P. hordei, Typhula sp., Micronectriella nivalis, Ustilago tritici, U. nuda, Pseudocercosporella herpotrichoides, Rhynchosporium secalis, Septoria tritici, Leptosphaeria nodorum of barley; Diaporthe citri, Elsinoe fawcetti, Penicillium digitatum, P. italicum of citrus fruits; Sclerotinia mali, Valsa mali, Podosphaera leucotricha, Alternaria mali, Venturia inaequalis of an apple; Venturia nashicola, Alternaria kikuchiana, Gymnosporagium haraeanum of a pear; Sclerotinia cinerea, Cladosporium carpophilum, Phomopsis sp. of a peach; Elsinoe ampelina, Glomerella cingulata, Uncinula necator, Phakopsora ampelopsidis of a grape; Gloeosporium kaki, Cercospora kaki, Mycosphaerella nawae of a persimmon; Collectotrichum lagenarium, Sphaerotheca fuliginea, Mycosphaerella melonis of a melon; Alternaria solani, Cladosporium fulvum of a tomato; Phomopsis vexans, Erysiphe cichoracearum of an eggplant; Alternaria japonica, Cercosporella brassicae of Cruciferae vegetables; Puccinia allii of a spring onion; Cercospora kikuchii, Elsinoe glycines, Diaporthe phaseolorum var. sojae of a soy bean; colletotrichum lindemuthianum of a kidney bean; Mycosphaerella personatum, Cercospora arachidicola of a peanut; Erysiphe pisi of a pea; Alternaria solani of a potato; Sphaerotheca humuli of a strawberry; Exobasidium recticulatum, Elsinoe leucospila of a tea; Alternaria longipes, Erysiphe cichoracearum, Colletotrichum tabacum of a tobacco plant; Cercospora beticola of a sugar beet; Diplocarpon rosae, Sphaerotheca pannosa of a rose; Septoria chrysanthemi-indici, Puccinia horiana of a chrysanthemum; Botrytis cinerea, Sclerotinia sclerotiorum of a variety of crops and the like.

Consequently, the compositions of this invention can be applied as a fungicide onto paddy fields, fields, orchards, tea plantations, meadows, lawns and the like.

In the actual use of the compositions of this invention, only the ingredient compounds may be applied without addition of any other components, but usually the active ingredients are mixed with solid carriers, liquid carriers, surface active agents, and other formulating auxiliaries and formulated in the form of wettable powders, flowable suspensions, granules and dusts.

These compositions contain the active ingredients in an amount of 0.1 to 99.9%, preferably 1 to 99% by weight.

Examples of solid carriers include fine powdered or granular kaolin clay, attapulgite, bentonite, Japanese acid clay, pyrofilite talc, diatomaceous earth, calcite, corn stalk powder, walnut shell powder, urea, ammonium sulfate and synthetic hydrated silica. Examples of the liquid carriers include aromatic hydrocarbons, such as xylene and methylnaphthalene; alcohols such as isopropanol, ethylene glycol and

2

cellosolve; ketones such as acetone, cyclohexanone and isophorone; plant oil such as soy bean oil and cotton seed oil; dimethyl sulfoxide, acetonitrile and water.

Examples of the surface active agents employed for emulsification, dispersion, wetting-spread and the like include anionic surface active agents such as alkyl sulfate ester salts, alkyl (aryl) sulfonate salts dialkylsulfosuccinate salts, polyoxyethylene alkyl aryl ether phosphate salts and naphthalene sulfonic acid-formalin condensates, non-ionic surface active agents such as polyoxyethylene alkyl ethers, polyoxyethylene polyoxypropylene block copolymers, sorbitan fatty acid esters and polyoxyethylene sorbitan fatty acid ester; Examples of the formulating auxiliaries include lignine sulfonate salts, arginate salts, polyvinyl alcohol, gum arabic, CMC (carboxymethylcellulose) and PAP (isopropyl acid phosphate).

Formulation Examples will be shown hereinbelow. Parts are parts by weight.

Formulation Example 1

10 Parts of the Compound A, 20 parts of carbendazim, 3 parts of calcium lignin sulfonate, 2 parts of sodium lauryl sulfate and 65 parts of synthetic hydrated silica were well pulverized and admixed with one another to obtain a wettable powder.

Formulation Example 2

1 Part of the Compound A, 2 parts of benomyl, 1 part of synthetic hydrated silica, 2 parts of calcium lignin sulfonate, 30 parts of bentonite, and 64 parts of kaolin clay were well pulverized and admixed with one another and kneaded with addition of water and then subjected to granulation and drying to yield granules.

Formulation Example 3

10 Parts of the Compound A, 15 parts of methyl thiophanate, 3 parts of poloyoxyethylenesorbiton monooleate, 3 parts of CMC, and 69 parts of water were blended and pulverized by the wet method until the particle size of the active ingredient was 5 µm or less to yield a flowable suspension.

Formulation Example 4

0.5 Part of the Compound A, 1.5 parts of thiabendazole, 88 parts of kaolin clay and 10 parts of talc were pulverized and well blended to yield a dust.

These compositions are applied as such or after dilution with water to the leaves and soil. Increase in the controlling effect can be expected by the combination with other fungicides. Furthermore, these compositions may be used in combination with insecticides, acaricides, nematocides, herbicides, plant growth regulators, fertilizers and soil improving agents.

In the practical use of the present composition, the amount of the active ingredient applied is usually 1 to 500 g, preferably 10 to 100 g per one are. In the dilution of the wettable powders and flowable suspensions with water, the concentration of the active ingredients applied is 0.001 to 0.5%, preferably 0.01 to 0.1% and the above compositions can be applied as such without being added to granules and dust.

Control effects of the present composition on the plant disease is shown by the Test Examples. The tested compounds are the above said Compound A, Benomyl, Thiabendanzol, Carbendazim, Fuberidazole, Methyl thiophanate, and Thiophanate. The fungicides used as a comparison reference are shown in the following table.

3

# 0 092 961

TABLE

| Compound mark | Chemical structure | Common name |
|---|---|---|
| B | $Me_2N.S.N.S.CCl_2F$ with two $O$ double bonds on the S, and a phenyl ring | Dichlofluanid |
| C | tetrachloroisophthalonitrile structure with CN, Cl substituents | Chlorothalonil |

The control effect was evaluated by the numerical 6 steps and expressed by 0 to 5, depending on the disease conditions of the test plant, that is, colony and lesion of the leaves and stems.

5: Neither colony nor lesion was observed.
4: Colony or lesion of about 10% in area based on the total leaf area was observed.
3: Colony or lesion of about 30% in area based on the total leaf area was observed.
2: Colony or lesion of about 50% in area based on the total leaf area was observed.
1: Colony or lesion of about 70% in area based on the total leaf area was observed.
0: There is no difference in disease condition from the non-treatment.

Test Example 1
Control effect test on Gray mold of cucumber (Preventive effect)

Sandy soil was packed in plastic pots and cucumbers (SAGAMI HANGJIRO) were sowed and the resulting seedlings were grown in a greenhouse for 8 days. The wettable powder of the test compound formulated according to Formulation Example 1 was diluted with water to a predetermined concentration and sprayed onto the cucumber seedlings which had developed cotyledons. After spraying, an agar piece containing organisms causing Gray mold of cucumber was attached to the cucumber seedlings for inoculation. After inoculation, the cucumber seedlings were placed at 20°C for 3 days in high humidity and the control effect was examined. The results were shown in Table 1.

4

TABLE 1

| Test compound | Concentration of active ingredient applied (ppm) | Control effect |
|---|---|---|
| A | 10 | 0 |
| A | 3 | 0 |
| Benomyl | 10 | 3 |
| '' | 7 | 3 |
| Thiabendazole | 10 | 2 |
| '' | 7 | 2 |
| Carbendazim | 10 | 3 |
| '' | 7 | 3 |
| Fuberidazole | 10 | 2 |
| '' | 7 | 2 |
| Methyl thiophanate | 10 | 3 |
| '' | 7 | 2 |
| Thiophanate | 10 | 3 |
| '' | 7 | 2 |
| A + Benomyl | 3 + 7 | 5 |
| A + Thiabendazole | 3 + 7 | 5 |
| A + Carbendazim | 3 + 7 | 5 |
| A + Fuberidazole | 3 + 7 | 5 |
| A + Methyl thiophanate | 3 + 7 | 5 |
| A + Thiophanate | 3 + 7 | 5 |
| B | 100 | 2 |

Test Example 2

Control effect of Powdery mildew of cucumber (Preventive effect)

Sandy soil was packed in plastic pots and cucumbers (SAGAMI HANJIRO) were sowed and grown in a greenhouse for 20 days. The wettable powder of the test compound formulated according to Formulation Example 1 was diluted with water to a predetermined concentration and sprayed onto the leaves of the cucumber seedlings which had developed a second leaf.

After spraying, a spore-suspension of organisms causing Powdery mildew of cucumber was sprayed over the cucumber seedlings for inoculation. After inoculation, the seedlings were grown at 20°C for 10 days and then the control effect was examined. The results were shown in Table 2.

TABLE 2

| Test compound | Concentration of active ingredient applied (ppm) | Control effect |
|---|---|---|
| A | 3 | 3 |
| " | 1 | 2 |
| Benomyl | 3 | 1 |
| " | 2 | 0 |
| Thiabendazol | 3 | 0 |
| " | 2 | 0 |
| Carbendazim | 3 | 1 |
| " | 2 | 1 |
| Fuberidazole | 3 | 1 |
| " | 2 | 0 |
| Methyl thiophanate | 3 | 1 |
| " | 2 | 0 |
| Thiophanate | 3 | 1 |
| " | 2 | 0 |
| A + Benomyl | 1 + 2 | 5 |
| A + Thiabendazole | 1 + 2 | 5 |
| A + Carbendazim | 1 + 2 | 5 |
| A + Fuberidazole | 1 + 2 | 5 |
| A + Methyl thiophanate | 1 + 2 | 5 |
| A + Thiophanate | 1 + 2 | 5 |
| B | 100 | 3 |

Test Example 3

Control effect on Blast of rice plant (Preventive effect)

Sandy soil was packed in plastic pots and rice plants (KINKI No. 33) were sowed therein and grown in a greenhouse. A wettable powder of the test compounds formulated according to Formulation Example 1 was diluted with water to a predetermined concentration and sprayed onto the rice plant seedlings which had developed a third leaf.

After spraying, a spore suspension of organisms causing rice blast was sprayed onto the rice plant seedlings for inoculation. After inoculation, the rice plants were placed at 25°C in a high humidity for 4 days and then the control effect was examined. The results were shown in Table 3.

6

TABLE 3

| Test compound | Concentration of active ingredient applied (ppm) | Control effect |
|---|---|---|
| A | 75 | 3 |
| " | 25 | 1 |
| Benomyl | 75 | 3 |
| " | 50 | 2 |
| Thiabendazole | 75 | 2 |
| " | 50 | 1 |
| Carbendazim | 75 | 3 |
| " | 50 | 2 |
| Fuberidazole | 75 | 3 |
| " | 50 | 2 |
| Methyl thiophanate | 75 | 3 |
| " | 50 | 2 |
| Thiophanate | 75 | 2 |
| " | 50 | 2 |
| A + Benomyl | 25 + 50 | 5 |
| A + Thiabendazole | 25 + 50 | 5 |
| A + Carbendazim | 25 + 50 | 5 |
| A + Fuberidazole | 25 + 50 | 5 |
| A + Methyl thiophanate | 25 + 50 | 5 |
| A + Thiophanate | 25 + 50 | 5 |

Test Example 4

Control effect on infection of Chinese cabbage (Cercospollera brassicae) (Curative effect)

Sandy soil was packed in plastic pots and Chinese cabbages (Nagaoka No. 2) were sowed therein and grown in a greenhouse for 30 days. A spore suspension of Cercospollera brassicae of Chinese cabbage was sprayed to the Chinese cabbage seedlings which had developed a second leaf for inoculation. After inoculation, the seedlings were placed at 20°C in a high humidity for a day.

A wettable powder of the test compounds formulated according to Formulation Example 1 was diluted with water to a predetermined concentration and was sprayed onto the seedlings so as to adhere sufficiently to the leaves. After spraying, the seedlings were grown in a greenhouse for 14 days and then the control effect was examined. The results were shown in Table 4.

7

TABLE 4

| Test compound | Concentration of active ingredient applied (ppm) | Control effect |
|---|---|---|
| A | 10 | 3 |
| " | 3 | 1 |
| Benomyl | 10 | 2 |
| " | 7 | 2 |
| Thiabendazole | 10 | 2 |
| " | 7 | 1 |
| Carbendazim | 10 | 2 |
| " | 7 | 2 |
| Fuberidazole | 10 | 2 |
| " | 7 | 1 |
| Methyl thiophanate | 10 | 2 |
| " | 7 | 1 |
| Thiophanate | 10 | 1 |
| " | 7 | 1 |
| A + Benomyl | 3 + 7 | 5 |
| A + Thiabendazole | 3 + 7 | 5 |
| A + Carbendazim | 3 + 7 | 5 |
| A + Fuberidazole | 3 + 7 | 5 |
| A + Methyl thiophanate | 3 + 7 | 5 |
| A + Thiophanate | 3 + 7 | 5 |
| C | 100 | 0 |

**Claims**

1. A fungicidal composition which comprises an inert carrier and as the active ingredients (E)-1-(2,4-dichlorophenyl)-4,4-dimethyl-2-(1,2,4-triazol-1-yl)-1-penten-3-ol and a benzimidazole or thiophanate type fungicide in the ratio of 1:0.1 to 1:10 by weight, the total active ingredients comprising 0.1 to 99.9% by weight of the composition.

2. The composition according to claim 1 wherein the ratio of (E)-1-(2,4-dichlorophenyl)-4,4-dimethyl-2-(1,2,4-triazol-1-yl)-1-penten-3-ol to benzimidazole or thiophanate type fungicide is 1:0.5 to 1:5 by weight.

3. The composition according to claim 1 or 2 wherein the total amount of (E)-1-(2,4-dichlorophenyl)-4,4-dimethyl-2-(1,2,4-triazol-1-yl)-1-penten-3-ol and benzimidazole or thiophanate type fungicide is 1 to 99% by weight of the composition.

4. The composition according to any one of the preceding claims wherein the benzimidazole or thiophanate type fungicide is methyl 1-(butylcarbamoyl)-2-benzimidazole carbamate, 2-(4-thiazolyl)-benzimidazole, methyl 2-benzimidazole carbamate, 2-(2-furyl)benzimidazole, 1,2-bis(3-methoxycarbonyl-2-thioureido)benzene or 1,2-bis(ethoxycarbonyl-2-thioureido)benzene.

8

**0 092 961**

5. A method for controlling fungi which comprises applying a fungicidally effective amount of the fungicidal composition according to any one of the preceding claims, to the fungi or to a locus susceptible to fungal attack.

**Patentansprüche**

1. Fungizide Zusammensetzung, welche ein inertes Trägermaterial und als wirksame Bestandteile (E)-1-(2,4-Dichlorphenyl)-4,4-dimethyl-2-(2,2,4-triazol-1-yl)-1-penten-3-ol und ein Fungizid vom Benzimidazol- oder Thiophanattyp im Gewichtsverhältnis 1:0,1 bis 1:10 enthält, wobei das Gesamtgewicht der wirksamen Bestandteile 0,1 bis 99,9 Gew.-% der Zusammensetzung umfaßt.

2. Zusammensetzung nach Anspruch 1, worin das Gewichtsverhältnis von (E)-1-(2,4-Dichlorphenyl)-4,4-dimethyl-2-(1,2,4-triazol-1-yl)-1-penten-3-ol zum Fungizid vom Benzimidazol- oder Thiophanattyp 1:0,5 bis 1:5 Gew.-% beträgt.

3. Zusammensetzung nach Anspruch 1 oder 2, worin der Gesamtmenge von (E)-1-(2,4-Dichlorphenyl)-4,4-dimethyl-2(1,2,4-triazol-1-yl)-1-penten-3-ol und dem Fungizid vom Benzimidazol- oder Thiophanattyp 1 bis 99 Gew.-% der Zusammensetzung beträgt.

4. Zusammensetzung nach einem der vorhergehenden Ansprüche, worin das Fungizid vom Benzimidazol- oder Thiophanattyp Methyl-1-(butylcarbamoyl)-2-benzimidazolcarbamat, 2-(4-Thiazoyl)-benzimidazol, Methyl-2-benzimidazolcaramat, 2-(2-Furyl)-benzimidazol, 1,2-bis(3-Methoxycarbonyl-2-thio-ureido)benzol oder 1,2-bis(Ethoxycarbonyl-2-thioureido)benzol ist.

5. Verfahren zum Zurückdrangen von Pilzen, welches das Auftragen einer fungizid wirksamen Menge der fungiziden Zusammensetzung nach einem der vorhergehenden Ansprüche auf die Pilze oder eine für Pilzbefall anfällige Stelle umfaßt.

**Revendications**

1. Composition fongicide, comprenant un excipient inerte et, en tant qu'ingrédients actifs, du (E)-1-(2,4-dichlorophényl)-4,4-diméthyl-2-(1,2,4-triazol-1-yl)-1-pentène-3-ol et un fongicide du type benzimidazole ou thiophannate dans un rapport de 1:0,1 à 1:10 en poids, les ingrédients actifs totaux constituant 0,1 à 99,9% en poids de la composition.

2. Composition selon la revendication 1, dans laquelle le rapport du (E)-1-(2,4-dichlorophényl)-4,4-diméthyl-2-(1,2,4-triazol-1-yl)-1-pentène-3-ol au fongicide du type benzimidazole ou thiophannate se situe entre 1:0,5 et 1:5 en poids.

3. Composition selon la revendication 1 ou 2, dans laquelle la quantité totale de (E)-1-(2,4-dichlorophényl)-4,4-diméthyl-2-(1,2,4-triazol-1-yl)-1-pentène-3-ol et de fongicide du type benzimidazole ou thiophannate se situe entre 1 et 99% en poids de la composition.

4. Composition selon l'une quelconque des revendications 1 à 3, dans laquelle le fongicide du type benzimidazole ou thiophannate est le 1-(butylcarbamoyl)-2-benzimidazole-carbamate de méthyle, le 2-(4-thiazolyl)benzimidazole, le 2-benzimidazolecarbamate de méthyle, le 2-(2-furyl)benzimidazole, le 1,2-bis(3-méthoxycarbonyl-2-thio-uréido)benzène ou le 1,2-bis(éthoxycarbonyl-2-thio-uréido)benzène.

5. Procédé pour lutter contre les champignons, consistant à appliquer une quantité, suffisante pour avoir une action fongicide, de la composition fongicide selon l'une quelconque des revendications 1 à 4, aux champignons ou à des sites susceptibles d'attaque par les champignons.

9